# FASCICULE DE BREVET EUROPEEN

(11) **EP 4 324 746 B1**
(45) Date de publication et mention de la délivrance du brevet: **31.12.2025**
(21) Numéro de dépôt: 24151080.9
(22) Date de dépôt: 12.01.2022
(51) Int. Cl.: B64D 31/04, B64D 31/14, B64D 31/06, B64C 13/50

(54) **SYSTÈME DE PILOTAGE D'AÉRONEF, AÉRONEF ET PROCÉDÉ ASSOCIÉS**
FLUGZEUGSTEUERUNGSSYSTEM, FLUGZEUG UND VERFAHREN DAFÜR
AIRCRAFT PILOTING SYSTEM, ASSOCIATED AIRCRAFT AND METHOD

(30) Priorité: 13.01.2021 FR 2100288
(43) Date de publication de la demande: 21.02.2024
(62) Demande divisionnaire de: 22151182.7
(73) Titulaire: Dassault Aviation, 75008 Paris (FR)
(72) Inventeur: CAPPELLE, Jérôme, 92214 Saint Cloud (FR); PINEAU, François, 92214 Saint Cloud (FR); FAYSSE, William, 92214 Saint Cloud (FR)
(74) Mandataire: Lavoix

(56) Documents cités:
- WO-A1-2020/079675
- US-A1- 2018 201 386
- US-B2- 10 414 512

## Description

La présente invention concerne un système de pilotage d'aéronef du type comportant :
- une manette des gaz, actionnable par un pilote de l'aéronef, la manette des gaz comprenant au moins un levier et un corps de base, le levier étant mobile angulairement ou en translation par rapport au corps de base, la manette des gaz étant configurée pour émettre un signal représentatif de la position du levier par rapport au corps de base ;
- un système de capteurs de paramètres de vol de l'aéronef ;
- une centrale de calcul moteur propre à contrôler des paramètres de poussée d'au moins un moteur de l'aéronef en actionnant des organes de commande du moteur.

Dans un aéronef civil traditionnel, il est connu que la centrale de calcul moteur reçoive directement le signal analogique émis par la manette, et contrôle, en fonction de ce signal, les paramètres de poussée du moteur. En d'autres termes, la centrale de calcul moteur fait l'acquisition de la commande de poussée directement au travers de la position analogique de la manette des gaz.

Cependant, un tel système ne donne pas entière satisfaction. En effet, ce système implique des bruits d'acquisition analogique importants, qui sont d'autant plus importants que la distance entre la manette des gaz et le moteur est grande.

De plus, la centrale de calcul moteur est au plus près du moteur qu'elle contrôle. Ainsi, l'étage d'acquisition du signal analogique de la centrale de calcul moteur est dans un environnement difficile, notamment du point de vue de la température et des vibrations générées par le moteur. Une acquisition du signal analogique dans un tel environnement diminue la fiabilité de la commande des moteurs.

Il est aussi connu un système de pilotage dans lequel la manette des gaz est motorisée, et comprend donc un moteur pour déplacer angulairement le levier par rapport au corps de base. Un tel système comprend notamment alors des algorithmes dits « d'auto-manette », qui actionnent automatiquement la manette des gaz en asservissant la position du levier pour faire varier la commande de poussée.

Dans le cas où la manette n'est pas motorisée, l'auto-manette élabore un offset qui est acquis par la centrale de calcul moteur et sommé à la position angulaire acquise.

Cependant, l'auto-manette induit une latence et un retard importants dans la commande de la poussée. Aussi, en cas de défaillance de la manette des gaz (par exemple, une perte de la motorisation ou autre), la fonction de contrôle de poussée par l'auto-manette est perdue. De plus, la perte totale de la position manette implique une incapacité à piloter le moteur que ce soit en manuel ou en automatique.

Le document WO 2020/079675 décrit un exemple de système de pilotage d'aéronef comprenant une manette des gaz, un système de capteurs de paramètres de vol de l'aéronef et des centrales de calcul moteur.

Le document US 10 414 512 décrit un exemple de système de pilotage d'hélicoptère comportant un dispositif d'émission d'un signal d'action de pilote, un système de capteurs de paramètres de vol de l'aéronef, et une centrale de calcul moteur.

Le document US 2018/201386 décrit un exemple de système de redémarrage de moteur d'hélicoptère.

Un but de l'invention est donc de fournir un système de pilotage permettant d'améliorer la commande de poussée des moteurs.

A cet effet, l'invention concerne un système de pilotage selon la revendication 1.

Le système de pilotage selon l'invention peut être selon l'une quelconque des revendications 2 à 14.

Le système de pilotage selon l'invention peut comprendre l'une ou plusieurs des caractéristiques suivantes, prise(s) isolément ou suivant toute combinaison techniquement possible : la centrale de commande de vol est configurée pour traiter les signaux reçus de la manette des gaz afin d'appliquer une protection en survitesse et/ou en évitement d'un décrochage de l'aéronef.

La présente divulgation concerne aussi un aéronef comprenant un système de pilotage tel que défini ci-dessus.

De plus, l'invention a également pour objet un procédé de pilotage d'un aéronef selon la revendication 15.

L'invention sera mieux comprise à la lecture de la description qui va suivre, donnée uniquement à titre d'exemple, et faite en se référant aux dessins annexés, sur lesquels :
[Fig 1] la figure 1 est un schéma synoptique fonctionnel représentant schématiquement une architecture d'un exemple de système de pilotage d'aéronef selon l'invention ; et
[Fig 2] la figure 2 est un organigramme d'un exemple de procédé de pilotage selon l'invention.

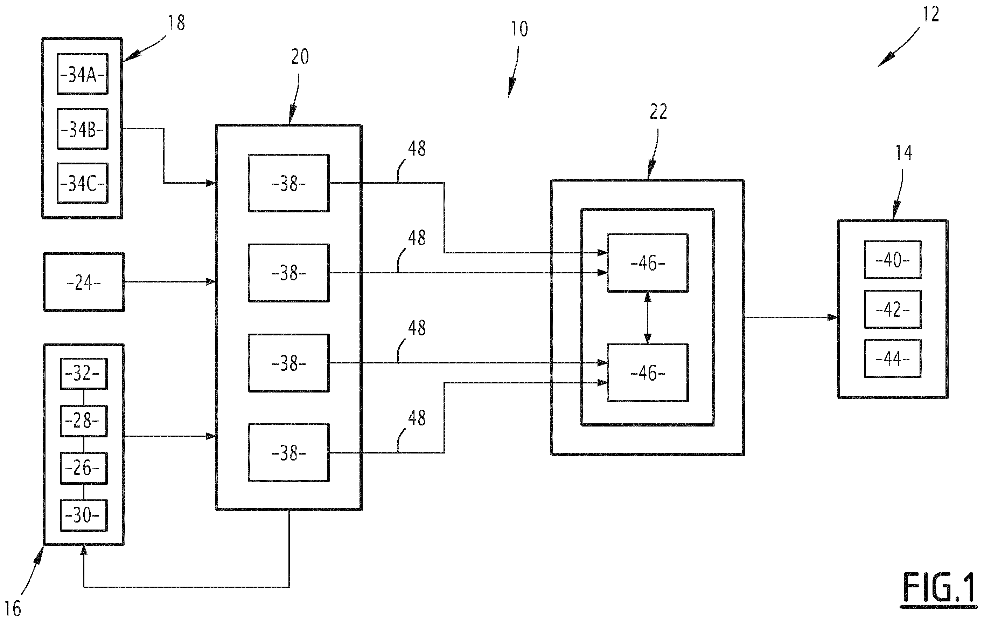

Un exemple de système de pilotage 10 selon l'invention, compris de préférence dans un aéronef 12, est illustré schématiquement sur la figure 1.

L'aéronef 12 est par exemple un aéronef civil de transport de passagers, notamment un avion d'affaires, ou un avion militaire.

L'aéronef 12 est muni de surfaces de contrôle non représentées, notamment de gouvernes de tangage, de roulis et de direction, et d'aérofreins.

L'aéronef 12 comprend au moins un moteur 14, par exemple une pluralité de moteurs.

Le système de pilotage 10 comprend au moins une manette des gaz 16, un système de capteurs 18, une centrale de commande de vol 20, et une centrale de calcul moteur 22.

Le système de pilotage 10 comprend aussi de préférence une interface homme-machine 24 propre à permettre à un membre d'équipage de définir manuellement au moins une consigne de vol à imposer à l'aéronef 12.

La manette des gaz 16 est actionnable par un pilote de l'aéronef 12, et comprend au moins un levier 26 et un corps de base 28.

Le levier 26 est mobile par rapport au corps de base 28.

De préférence, le levier 26 est mobile angulairement par rapport au corps de base 28. Alternativement, le levier 26 est mobile en translation par rapport au corps de base 28.

Le levier 26 est propre à être saisi par le pilote de l'aéronef 12 pour être déplacé par rapport au corps de base 28. Par un tel déplacement du levier 26, qui correspond à l'actionnement de la manette des gaz 16, le pilote vise à commander une poussée de l'aéronef.

La manette des gaz 16 comprend aussi un moteur 30 configuré pour déplacer le levier 26 par rapport au corps de base 28.

La manette des gaz 16 est configurée pour émettre au moins un signal représentatif de la position, par exemple angulaire, du levier 26 par rapport au corps de base 28.

Ce signal est représentatif de la poussée que souhaite commander le pilote.

Pour cela, la manette des gaz 16 comprend un capteur 32 configuré pour mesurer ladite position, par exemple angulaire, du levier 26 et émettre ledit signal représentatif. Un tel capteur est par exemple un capteur RVDT (de l'anglais « Rotary Variable Differential Transformer »).

De préférence, l'acquisition de la position du levier 26 par rapport au corps de base 28 est redondée, la manette des gaz 16 étant configurée pour émettre une pluralité de signaux représentatifs de la même position courante du levier 26 par rapport au corps de base 28.

Ledit signal représentatif est par exemple un signal analogique. Alternativement, ledit signal représentatif est par exemple un signal numérique.

Un signal analogique est ici et par la suite défini comme étant formé par un courant électrique et/ou une tension électrique variant dans des limites fixées. En particulier, le signal analogique présente une variation continue, c'est-à-dire sans paliers ni niveaux prédéfinis.

Le signal analogique s'oppose ainsi à un signal numérique, qui utilise une quantification et un codage de l'information.

En particulier, un signal numérique fait circuler des informations représentées par un nombre fini de valeurs discrètes déterminées, ces valeurs discrètes étant prises par au moins une caractéristique du signal numérique au cours du temps.

Le système de capteurs 18 est un système de capteurs de paramètres de vol de l'aéronef.

Chaque capteur du système 18 est propre à mesurer un paramètre de vol de l'aéronef 12 et à émettre un signal représentatif d'une valeur courante dudit paramètre de vol. Le signal représentatif émis par chaque capteur est analogique ou numérique.

Le système de capteurs 18 comprend par exemple au moins un capteur inertiel 34A.

Chaque capteur inertiel 34A est par exemple une centrale inertielle éventuellement hybridée avec un système de positionnement par satellite, en particulier des GPS.

Chaque capteur inertiel 34A est propre à mesurer des valeurs courantes d'attitude, de cap, de route, de vecteur vitesse, de vitesse sol, d'accélération de l'aéronef 12, qui forment des paramètres de vol de l'aéronef 12.

Le système de capteurs 18 comporte aussi par exemple au moins un capteur de données air 34B.

Chaque capteur de données air 34B est propre à réaliser des mesures de vitesse et d'altitude sur la base de mesures de pressions statiques ou dynamiques. Il comprend par exemple des sondes Pitot.

Chaque capteur de données air 34B est propre à mesurer des valeurs courantes de vitesse air, de Mach, de badin, d'altitude, et de températures totales et statiques de l'aéronef 12, qui forment des paramètres de vol de l'aéronef 12.

Le système de capteurs 18 comporte en outre par exemple au moins un capteur 34C d'attitude et de cap de référence.

Chaque capteur 34C d'attitude et de cap de référence est par exemple constitué d'au moins un gyromètre, d'au moins un accéléromètre, ou/et d'au moins un magnétomètre qui détectent les accélérations et les champs magnétiques subis par l'aéronef 12. Chaque capteur 34C d'attitude et de cap de référence est par exemple formé de systèmes micro-électromécaniques (ou MEMS en anglais).

Chaque capteur 34C d'attitude et de cap de référence est propre également à obtenir des valeurs courantes d'attitude, de cap, de route, et d'accélération de l'aéronef 12, qui forment des paramètres de vol de l'aéronef 12.

Les capteurs du système de capteurs 18 sont raccordés à la centrale de commande de vol 20, pour délivrer à chaque instant, les valeurs courantes des paramètres de vol qu'ils mesurent à la centrale de commande de vol 20, par exemple à une fréquence supérieure ou égale à 50 Hz.

La centrale de commande de vol 20 est raccordée à la centrale de calcul moteur 22, aux capteurs du système de capteurs 18 et à la manette des gaz 16.

Comme illustrée sur la figure 1, la centrale de commande de vol 20 est interposée entre la manette des gaz 16 et la centrale de calcul moteur 22. Ainsi, il n'y a plus de liaison directe entre la manette des gaz 16 et la centrale de calcul moteur 22.

La centrale de commande de vol 20 est un système de commandes de vol numériques (« Digital Flight Command System » ou « DFCS » en anglais).

La centrale de commande de vol 20 est configurée pour recevoir au moins le signal représentatif émis par la manette des gaz 16 et les signaux émis par les capteurs du système de capteurs 18.

Au moins un desdits signaux est par exemple analogique. En particulier, au moins le signal émis par la manette des gaz 16 est par exemple analogique.

De manière générale, la centrale de commande de vol 20 est configurée pour élaborer au moins un vecteur de commande de poussée obtenu à partir d'au moins une loi de commande de vol, ayant pour données d'entrée au moins les signaux reçus de la manette des gaz 16 et/ou des capteurs du système de capteurs 18. La centrale de commande de vol 20 est alors configurée pour envoyer un signal numérique comprenant le vecteur de commande de poussée à la centrale de calcul moteur 22.

En particulier, chaque vecteur de commande de poussée est transporté et codé en binaire sous forme de chaînes de bits.

La centrale de commande de vol 20 est disposée de préférence à l'écart du ou de chaque moteur 14 de l'aéronef 12 de sorte à ne pas être l'objet d'une élévation de température et/ou de vibrations provenant du ou de chaque moteur 14.

De préférence, comme illustré dans l'exemple de la figure 1, la centrale de commande de vol 20 comprend au moins quatre calculateurs 38 redondants de commande de vol.

Chaque calculateur de commande de vol 38 comporte par exemple un processeur et une mémoire contenant des modules ou applications logicielles propres à être exécutées par le processeur pour réaliser les fonctions du calculateur 38 décrites ci-dessous. En variante, chaque calculateur de commande de vol 38 est mis en œuvre sous forme de composants logiques programmables ou de circuits intégrés dédiés, destinés à réaliser les fonctions du calculateur 38 décrites ci-dessous.

Les calculateurs de commande de vol 38 sont disposés par exemple à l'écart du ou de chaque moteur 14 comme indiqué ci-dessus.

Chaque calculateur de commande de vol 38 est connecté à la manette des gaz 16 et au système de capteurs 18. En particulier, chaque calculateur de commande de vol 38 est configuré pour recevoir au moins le signal représentatif émis par la manette des gaz 16 et les signaux émis par les capteurs du système de capteurs 18.

Chaque calculateur de commande de vol 38 est configuré pour élaborer en parallèle un vecteur de commande de poussée à partir d'au moins ladite loi de commande de vol, qui a pour données d'entrée au moins lesdits signaux de la manette des gaz 16 et/ou des capteurs du système de capteurs 18 reçus par le calculateur de commande de vol 38.

Pour cela, chaque calculateur de commande de vol 38 est propre à mettre en œuvre une conversion analogique/numérique de chaque signal analogique reçu de la manette des gaz 16 et/ou des capteurs du système de capteurs 18.

Les données d'entrée de la loi de commande sont en particulier des données représentatives des valeurs courantes des paramètres de vol mesurées par les capteurs du système 18 et, le cas échéant, de la position courante, par exemple angulaire, du levier 26 de la manette des gaz 16 actionnée par le pilote.

La loi de commande, de préférence une pluralité de lois de commande, est(sont) prédéfinie(s) pour l'aéronef 12, par exemple en fonction d'un niveau de fonctionnement des équipements de l'aéronef 12. Chaque loi de commande est par exemple stockée dans la mémoire de chaque calculateur de commande de vol 38.

Ici et par la suite, on entend par « vecteurs de commande élaborés en parallèle », des vecteurs de commande ayant été respectivement élaborés par les calculateurs de commande de vol 38 à partir des mêmes valeurs des données d'entrée dans la loi de commande.

Ils sont élaborés pour les mêmes valeurs courantes des paramètres de vol mesurées par les capteurs du système 18 et, le cas échéant, pour la même position du levier 26, par rapport au corps de base 28, de la manette des gaz 16 actionnée par le pilote.

Les vecteurs de commande élaborés en parallèle par les calculateurs de commande de vol 38 sont identiques, sauf erreur d'élaboration de la part d'au moins un des calculateurs, et en négligeant les éventuels asynchronismes.

Chaque vecteur de commande élaboré comprend une consigne d'actionnement des organes de commande 42, 44 du moteur 14, destinée à être appliquée par la centrale de calcul moteur 22.

Cette consigne d'actionnement contient les informations permettant à la centrale de calcul moteur 22 de savoir quel(s) organe(s) de commande 42, 44 actionner et dans quelle mesure.

De préférence, chaque vecteur de commande comprend en outre au moins une information additionnelle, par exemple obtenue à partir d'au moins un des capteurs du système 18. Chaque information additionnelle est de préférence un paramètre anémométrique.

Par la suite, chaque calculateur de commande de vol 38 est configuré pour envoyer un signal numérique comprenant le vecteur de commande de poussée élaboré à la centrale de calcul moteur 22.

Plus précisément, des vecteurs de commande de poussée sont élaborés successivement, par chaque calculateur de commande 38, et sont envoyés dans le signal numérique émis par chaque calculateur de commande 38.

En particulier, chaque calculateur de commande de vol 38 est propre à élaborer un vecteur de commande de poussée, comme décrit ci-dessus, par exemple à une fréquence d'élaboration supérieure ou égale à 20 Hz. Chaque calculateur de commande de vol 38 est propre à envoyer le vecteur de commande de poussée élaboré par exemple à une fréquence de transfert supérieure ou égale à 20 Hz.

Avantageusement, la centrale de commande de vol 20 est configurée pour commander le moteur 30 de la manette des gaz 16, en fonction d'une règle de commande prédéterminée.

Dans un mode de réalisation, le moteur 30 est commandé en fonction de la règle de commande pour déplacer le levier 26 par rapport au corps de base 28.

La règle de commande est stockée dans au moins une des mémoires.

De préférence, la règle de commande est fonction de chaque vecteur de poussée élaborée. Le moteur 30 est alors commandé de préférence en fonction de la règle de commande pour déplacer le levier 26, d'un déplacement représentatif de la poussée commandée.

Pour ce faire, la règle de commande comprend par exemple une table de correspondance reliant un vecteur de commande de poussée élaboré à un angle ou une distance du levier 26 par rapport au corps de base 28.

De préférence, le déplacement commandé correspond en particulier à celui qu'aurait le levier 26 de la manette des gaz 16 si le pilote avait commandé une poussée correspondant au vecteur de commande élaboré. Le déplacement motorisé du levier 26 de la manette des gaz 16 reflète ainsi avantageusement la commande élaborée par la centrale de commande de vol 20.

Alternativement, le déplacement motorisé du levier 26 de la manette des gaz 16 ne reflète pas la commande élaborée par la centrale de commande de vol 20, mais est choisi différemment de sorte à assurer une cohérence entre commande des moteurs de l'aéronef et commande du déplacement du levier 26 de la manette 16. La règle de commande est par exemple indépendante de chaque vecteur de commande de poussée élaboré.

Dans un mode de réalisation préféré, chaque calculateur de commande de vol 38 est configuré pour générer une capsule comprenant le vecteur de commande élaboré.

Les vecteurs de commande élaborés successivement par un même calculateur 38 sont alors envoyés sous forme d'une pluralité de capsules successives respectives.

Ainsi, chaque signal numérique émis par les calculateurs de commande de vol 38 inclut une pluralité de capsules émises à des instants successifs.

Chaque capsule comprend alors avantageusement un identifiant de producteur de données, un compteur incrémenté à chaque élaboration de données, un paquet de données fonctionnelles comprenant ledit vecteur de commande de poussée, et un résultat de contrôle d'intégrité des données portant sur l'identifiant, le compteur et le paquet de données fonctionnelles.

L'identifiant est par exemple une chaine de bits, permettant d'identifier le calculateur de commande de vol 38 ayant élaboré le vecteur de commande de poussée de la capsule, et ayant généré la capsule.

L'identifiant est ainsi caractéristique du calculateur de commande de vol 38 ayant émis la capsule. Plus précisément, chaque calculateur de commande de vol 38 est associé à un identifiant de producteur distinct.

Le compteur est une chaine de bits codant un numéro d'ordre d'élaboration du paquet de données fonctionnelles à chaque élaboration du paquet de données fonctionnelles. Le compteur est par exemple incrémenté unitairement à chaque élaboration de paquet de données fonctionnelles. Le compteur est de préférence incrémenté indépendamment de la fréquence de transfert.

Le compteur permet d'associer, à chaque capsule transmise, une mesure de rafraîchissement des données, qui permet de s'assurer que le paquet de données fonctionnelles récupérées par la centrale de calcul moteur 22 a bien été rafraîchi par le calculateur de commande de vol 38 et est donc valide.

En particulier, l'incrémentation du compteur à chaque élaboration de données fonctionnelles par le calculateur de commande de vol 38 assure qu'un rafraîchissement des données s'est produit, et non qu'une simple nouvelle transmission de données sans rafraichissement s'est produite.

Le compteur est propre à se remettre à zéro, lorsqu'un maximum prédéfini du compteur a été atteint.

Le paquet de données fonctionnelles comprend par exemple seulement un unique vecteur de commande de poussée élaboré.

En particulier, une capsule respective est générée pour chaque vecteur de commande de poussée.

Le résultat de contrôle d'intégrité est une chaine de bits codant un nombre de contrôle calculé par un traitement mathématique, à partir d'une représentation fonctionnelle intégrant l'identifiant de la capsule, le compteur de la capsule, et le paquet de données fonctionnelles de la capsule.

Le résultat de contrôle d'intégrité vise à détecter une corruption de la capsule. En particulier, une telle corruption de la capsule peut se produire en cas de problème de mémoire au sein du calculateur de commande de vol 38 et/ou en cas de perturbation électromagnétique due à l'environnement du calculateur 38 ou de la liaison avec la centrale de calcul moteur 22.

De préférence, le résultat de contrôle d'intégrité est le résultat d'une somme de contrôle, ou d'un code de redondance cyclique (CRC). Par exemple, pour assurer une bonne fiabilité de la vérification d'intégrité, le résultat de calcul d'intégrité est obtenu par une somme de contrôle MIL-STD-1760, ou par un code de redondance cyclique CRC-32K/6.4.

Le traitement mathématique est par exemple un algorithme choisi en fonction des objectifs de sécurité à atteindre, d'une longueur minimale/maximale du paquet de données, de l'identifiant, du compteur, et d'une fiabilité de la liaison de données, en terme de taux d'erreur de bits (en anglais BER, pour « Bit Error Rate »). Des exemples d'algorithmes utilisés sont décrits dans le document DOT/FA/TC-14/49 de l'Administration Fédérale d'Aviation des Etats-Unis d'Amérique, mars 5015, disponible à l'adresse suivante : https://www.faa.gov/aircraft/air_cert/design_approvals/air_software/media/TC-14-49.pdf.

La centrale de calcul moteur 22 est connectée aux équipements du moteur 14. Les équipements du moteur 14 comprennent des capteurs 40 propres à surveiller un état du moteur 14, et comprennent aussi des organes de commande 42, 44 tels que des vannes 42 et des actionneurs 44, par exemple hydrauliques et électriques.

La centrale de calcul moteur 22 est un système de régulation numérique du moteur 14, de préférence du type ayant pleine autorité sur le contrôle du moteur 14 (« Full Authority Digital Engine Control » ou « FADEC » en anglais).

La centrale de calcul moteur 22 est alors de préférence configurée pour avoir pleine autorité sur le contrôle du moteur 14, de sorte que chaque organe de commande 42, 44 du moteur 14 est alors par exemple contrôlé uniquement par des signaux émis par la centrale de calcul moteur 22.

La centrale de calcul moteur 22 est proche du moteur 14. En particulier, par « proche », on entend que la centrale de calcul moteur 22 est propre à être l'objet d'une élévation de température et/ou de vibrations provenant du moteur 14.

La centrale de calcul moteur 22 est de préférence au contact de l'air ambiant et est refroidie par exemple par un système de refroidissement par prélèvement d'un flux d'air.

De manière générale, la centrale de calcul moteur 22 est configurée pour recevoir chaque signal numérique envoyé par la centrale de commande de vol 20, et pour contrôler des paramètres de poussée du moteur 14 en fonction d'au moins un vecteur de commande de poussée compris dans le signal numérique, en actionnant des organes de commande 42, 44 du moteur 14.

Les paramètres de poussée contrôlés par la centrale de calcul moteur 22 comprennent par exemple au moins un débit de carburant, une ignition, et une proportion de mélange carburant/air.

Plus précisément, comme illustré sur la figure 1, la centrale de calcul moteur 22 comprend au moins deux calculateurs moteurs redondants 46 (ou « Electronic Engine Controller »).

Chaque calculateur moteur 46 comporte par exemple un processeur et une mémoire contenant des modules ou applications logicielles propres à être exécutées par le processeur pour réaliser les fonctions du calculateur moteur 46 décrites ci-dessous. En variante, chaque calculateur moteur 46 est mis en œuvre sous forme de composants logiques programmables ou de circuits intégrés dédiés, destinés à réaliser les fonctions du calculateur moteur 46 décrites ci-dessous.

Dans l'exemple illustré sur la figure 1, un premier des calculateurs moteurs 46 n'est relié directement qu'à une partie, ici deux, des calculateurs de commande de vol 38. Ici, le premier des calculateurs moteurs 46 est connecté par au moins une liaison 48 de transfert de données numériques à deux des calculateurs de commande de vol 38.

Par exemple, le premier des calculateurs moteurs 46 est connecté auxdits deux calculateurs de commande de vol 38 par deux liaisons 48 de transfert de données numériques différentes.

Le deuxième des calculateurs moteurs 46 n'est relié directement qu'aux autres, ici qu'aux deux autres, des calculateurs de commande de vol 38. Dans cet exemple, le deuxième des calculateurs moteurs 46 est connecté par au moins une autre liaison 48 de transfert de données numériques aux deux autres des calculateurs de commande de vol 38.

Par exemple, le deuxième des calculateurs moteurs 46 est connecté auxdits deux autres calculateurs de commande de vol 38 par deux liaisons 48 de transfert de données numériques différentes.

Comme illustré sur la figure 1, pour chaque calculateur de commande de vol 38, une liaison 48 de transfert de données numériques relie ledit calculateur de commande de vol 38 à un seul des calculateurs moteurs 46. En d'autres termes, les liaisons 48 de transfert de données numériques présentent alors chacune une entrée connectée à un des calculateurs de commande de vol 38, une sortie connectée à un des calculateurs moteurs 46, et un lien reliant l'entrée à la sortie.

Chaque calculateur moteur 46 est propre à recevoir chaque vecteur de commande, notamment chaque capsule, envoyé(e) par les calculateurs de commande de vol 38 auxquels il est connecté par exemple à une fréquence de réception supérieure ou égale à 20 Hz.

Les deux calculateurs moteurs 46 sont aussi connectés l'un à l'autre. Comme illustré sur la figure 1, ils sont en particulier connectés par exemple de manière interne à la centrale de calcul moteur 22.

Ils sont de plus configurés pour communiquer l'un à l'autre les vecteurs de commande respectivement reçus, cette communication étant par exemple interne à la centrale de calcul moteur 22. Dans le cas où les vecteurs de commande sont encapsulés, les calculateurs moteurs 46 sont configurés pour communiquer l'un à l'autre les capsules respectivement reçues.

Chaque calculateur moteur 46 reçoit ainsi directement de la centrale de commande de vol 20 ou indirectement par l'autre calculateur moteur 46 les vecteurs de commande de poussée redondants élaborés en parallèle par chacun des calculateurs de commande de vol 38.

Cette architecture améliore notamment la sécurité de la transmission.

Chaque calculateur moteur 46 est configuré pour réaliser, à chaque instant, une sélection parmi les vecteurs de commande élaborés en parallèle par chaque calculateur de commande de vol 38, et pour contrôler lesdits paramètres de poussée du moteur 14 en fonction du vecteur de commande sélectionné.

En particulier, les organes de commande 42, 44 du moteur 14 sont actionnés par la centrale de calcul moteur 22 en fonction du vecteur de commande sélectionné, en particulier en fonction de la consigne d'actionnement contenue dans le vecteur de commande sélectionné. La centrale de calcul moteur 22 émet des signaux correspondants vers les organes de commande 42, 44.

Dans le mode de réalisation où les vecteurs de commande de poussée sont encapsulés, la sélection faite par chaque calculateur moteur 46 va maintenant être décrite plus en détails.

Pour réaliser cette sélection, chaque calculateur moteur 46 est configuré pour récupérer l'identifiant, le compteur, le paquet de données fonctionnelles, et le résultat de contrôle d'intégrité des capsules reçues contenant les vecteurs de commande élaborés en parallèle. Ces capsules sont désignées sous les termes de « capsules parallèles reçues » par la suite.

Chaque calculateur moteur 46 est alors configuré pour mettre en œuvre au moins un contrôle d'identification de l'identifiant, au moins un contrôle de validité du compteur et au moins un contrôle d'intégrité dudit résultat de contrôle pour chacune des capsules parallèles reçues.

Chaque calculateur moteur 46 est configuré pour sélectionner le vecteur de commande de poussée d'une desdites capsules parallèles reçues au moins si l'identifiant de la capsule est correct, si la capsule est valide et si la capsule est intègre.

De préférence, cette sélection est effectuée dès que, pour une desdites capsules parallèles reçues, l'identifiant de la capsule est correct, la capsule est valide et la capsule est intègre.

En particulier, les contrôles sont réalisés par chaque calculateur moteur 46 en parallèle, et dès qu'un vecteur de commande est sélectionné par un des calculateurs moteurs 46, la centrale de calcul moteur 22 applique la consigne d'actionnement dudit vecteur sélectionné.

Si l'identifiant de la capsule est incorrect, et/ou si la capsule est invalide, et/ou si la capsule est corrompue, le calculateur moteur 46 est propre à exclure les données provenant de la capsule. En particulier, un vecteur de commande de poussée contenue dans une telle capsule ne sera pas sélectionné et ne sera pas appliqué par le calculateur moteur 46.

Ces contrôles assurent une robustesse de l'ordre issu des calculateurs de commande de vol 38.

Lors du contrôle d'identification, le calculateur moteur 46 est propre à vérifier, à partir de l'identifiant, si les données reçues proviennent bien du calculateur de commande de vol 38 attendu.

Ainsi, le calculateur moteur 46 est configuré pour déterminer un état d'identification de la capsule entre un état d'identification correct et un état d'identification incorrect.

Cet état d'identification est déterminé en fonction de l'identifiant récupéré de la capsule reçue et d'un identifiant attendu pour la capsule reçue, par exemple à partir d'une sémantique prédéfinie ou/et d'une table de correspondance.

Lors du contrôle de validité, le calculateur moteur 46 est de préférence configuré pour déterminer un état de validité de la capsule entre un état valide et un état invalide, en vérifiant leur rafraichissement à l'aide du compteur extrait.

A cet effet, le calculateur moteur 46 est configuré pour déterminer un incrément de compteur à partir du compteur récupéré et à partir du compteur d'une autre capsule précédemment reçue par le calculateur moteur 46.

Le calculateur moteur 46 est configuré pour déterminer l'état de validité de la capsule en fonction d'une cohérence de l'incrément de compteur.

Il est propre à comparer le compteur extrait au compteur reçu d'une capsule précédente pour vérifier que le compteur s'est incrémenté.

Le calculateur moteur 46 est propre par exemple à calculer l'incrément entre le compteur extrait de la capsule reçue, et le compteur de la capsule reçue juste avant.

Si l'incrément est cohérent, le calculateur moteur 46 est propre à déterminer que les données fonctionnelles présentes dans la capsule sont bien des données rafraîchies et à placer la capsule dans l'état valide.

L'incrément est considéré comme cohérent par le calculateur moteur 46 au moins s'il est unitaire.

Avantageusement, le calculateur est configuré pour déterminer une cohérence de l'incrément calculé en fonction de la fréquence d'élaboration des capsules par le calculateur de commande de vol 38, de la fréquence de transfert des capsules par le calculateur de commande de vol 38, ou/et de la fréquence de réception des capsules par le calculateur moteur 46.

En particulier, dans le cas d'une fréquence de transfert ou de réception des données plus élevée que la fréquence d'élaboration des données fonctionnelles par le calculateur de commande de vol 38, le calculateur moteur 46 est propre à considérer comme cohérent un incrément de compteur nul sur un nombre de capsules déterminé, un tel nombre étant calculé par exemple en fonction des fréquences d'élaboration, de transfert ou d'acquisition des capsules.

Au-delà du nombre de capsules déterminé, si le compteur reste identique, il est apte à passer la capsule dans l'état invalide car ses données n'ont pas été rafraichies.

Par ailleurs, lorsque la fréquence d'élaboration ou/et de transfert des capsules est supérieure à la fréquence de réception des capsules, le calculateur moteur 46 est propre à considérer comme cohérent un incrément de compteur supérieur à un.

Dans tous les cas, le calculateur moteur 46 est propre à mémoriser le compteur de chaque capsule venant d'être reçue, pour permettre un calcul d'incrément lors de la réception de la capsule suivante.

Il est également propre à considérer comme cohérent un incrément de compteur résultant de la mise à zéro du compteur extrait, lorsque celui-ci a atteint précédemment sa valeur maximale.

Ainsi, en fonction de l'incrément calculé entre les compteurs de deux capsules successives, le calculateur moteur 46 est propre à déterminer que les données fonctionnelles présentes dans la capsule sont bien des données rafraîchies pouvant être utilisées par le calculateur moteur 46, et à passer la capsule dans l'état valide ; ou si au contraire, si les données ne sont pas rafraichies ou s'il manque des données intermédiaires non reçues, à passer la capsule dans l'état invalide.

Lors du contrôle d'intégrité, le calculateur moteur 46 est de préférence configuré pour déterminer un état d'intégrité des données de la capsule entre un état intègre et un état corrompu.

Pour ce faire, le calculateur moteur 46 est configuré pour établir un nouveau résultat de contrôle d'intégrité à partir de l'identifiant, du compteur et du paquet de données fonctionnelles récupérés dans la capsule reçue, et pour comparer le nouveau résultat de contrôle d'intégrité au résultat de contrôle d'intégrité récupéré dans la capsule.

En particulier, le calculateur moteur 46 est propre à appliquer le même traitement mathématique que celui mis en œuvre par le calculateur de commande de vol 38, pour établir le nouveau résultat de contrôle d'intégrité.

Le calculateur moteur 46 est propre à déterminer que la capsule comprenant l'identifiant, le compteur et le paquet de données est dans l'état intègre, si le nouveau résultat de contrôle d'intégrité qu'il a calculé à partir des données reçues est identique au résultat de contrôle d'intégrité extrait de la capsule.

Le calculateur moteur 46 est propre est propre à déterminer que la capsule est dans un état corrompu, si le nouveau résultat de contrôle d'intégrité qu'il a calculé à partir des données reçues est différent du résultat de contrôle d'intégrité extrait de la capsule.

Suite aux contrôles décrits ci-dessus, lorsque la capsule est dans l'état d'identification correct, dans l'état intègre et dans l'état valide, les données fonctionnelles qu'elle contient sont alors propres à être utilisées par le calculateur moteur 46.

Lorsqu'une capsule est dans l'état d'identification incorrect, dans l'état corrompu et/ou dans l'état invalide, le calculateur moteur 46 est propre à exclure les données provenant de la capsule.

Le calculateur moteur 46 est aussi alors propre de préférence à mettre en œuvre une phase de réarmement, pendant une durée de réarmement donnée correspondant par exemple à la réinitialisation d'un des calculateurs ou à l'arrêt d'une panne transitoire.

De préférence, si la panne d'identification, d'intégrité ou de rafraichissement affectant les données contenues dans les capsules se produit régulièrement ou de manière arbitraire, le calculateur moteur 46 est propre à stopper de manière définitive le réarmement et à déclarer le calculateur de commande de vol 38 émettant les capsules en défaut.

Le calculateur moteur 46 est alors configuré pour ne plus prendre en compte le signal numérique envoyé par ledit calculateur de commande de vol 38.

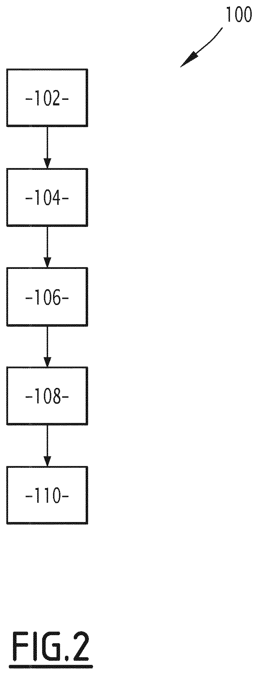

Un procédé 100 de pilotage de l'aéronef utilisant le système de pilotage 10 décrit ci-dessus va maintenant être décrit, en référence à la figure 2.

Le procédé 100 comprend la fourniture 102 dudit système de pilotage 10.

Le procédé 100 comprend l'élaboration 104, par la centrale de commande de vol 20, d'au moins un vecteur de commande de poussée obtenu à partir de la loi de commande de vol, ayant pour données d'entrée au moins les signaux reçus de la manette des gaz 16 et/ou des capteurs du système de capteurs 18.

Le procédé 100 comprend par la suite l'envoi 106 d'un signal numérique comprenant le vecteur de commande de poussée à la centrale de calcul moteur 22.

Ces étapes 104, 106 d'élaboration et d'envoi sont mises en œuvre par la centrale de commande de vol 20, de préférence de la manière décrite ci-dessus plus en détails pour le système de pilotage 10.

Le procédé 100 comprend alors la réception 108 du signal numérique, par la centrale de calcul moteur 22, et le contrôle 110 des paramètres de poussée du moteur 14 en fonction du vecteur de commande de poussée.

Ces étapes 108, 110 de réception et de contrôle sont mises en œuvre par la centrale de calcul moteur 22, de préférence de la manière décrite ci-dessus plus en détails pour le système de pilotage 10.

Des variantes du système de pilotage 10 vont maintenant être décrites.

En variante, la sélection par chaque calculateur moteur 46 n'est pas uniquement faite dès que, pour une des capsules, l'identifiant de la capsule est correct, la capsule est valide et la capsule est intègre. La sélection est alternativement faite par un vote centralisé effectué sur les capsules parallèles reçues. Le vote centralisé est alors effectué par exemple par des algorithmes de détermination par majorité ou par moyenne pondérée ou par médiane.

En variante, les vecteurs de commande ne sont pas encapsulés dans le signal numérique. Chaque calculateur moteur 46 est alors configuré pour sélectionner un des vecteurs en parallèles reçus par exemple par vote centralisé sur les vecteurs en parallèles reçus. Le vote centralisé est par exemple effectué par des algorithmes de détermination par majorité ou par moyenne pondérée ou par médiane.

En variante, chaque vecteur de commande élaboré ne comprend pas de paramètre anémométrique. Chaque calculateur de commande de vol 38 est par exemple alors configuré pour envoyer des valeurs courantes de paramètres anémométriques dans des capsules propres comprises dans le signal numérique. Ces capsules contenant les paramètres anémométriques sont par exemple émises à une fréquence différente de celles contenant les vecteurs de commande de poussée.

En variante préférée de l'exemple décrit ci-dessus, la centrale de commande de vol 20, et en particulier chaque calculateur de commande de vol 38, est aussi configuré(e) pour traiter les signaux reçus de la manette des gaz 16 et/ou du système de capteurs 18 afin d'appliquer une protection en survitesse et/ou en évitement d'un décrochage de l'aéronef.

Pour ce faire, la centrale de commande de vol 20, et en particulier chaque calculateur de commande de vol 38, est propre à déterminer des protections automatiques au moins pour empêcher une survitesse et/ou un décrochage. Chaque loi de commande de vol a alors pour données d'entrée au moins lesdits signaux de la manette des gaz 16 et/ou des capteurs du système de capteurs 18 reçus, et les protections déterminées.

Ainsi, la centrale de commande de vol 20 module les commandes entrées par le pilote lorsqu'il actionne la manette des gaz 16.

Dans une autre variante avantageuse, la centrale de commande de vol 20 présente un mode automatique de poussée, et un mode manuel de poussée.

Dans le mode manuel de poussée, chaque vecteur de commande de poussée est élaboré à partir des signaux reçus de la manette des gaz 16 et des capteurs du système de capteurs 18. Chaque calculateur de commande de vol 38 prend alors en particulier en compte un actionnement de la manette des gaz 16 par le pilote dans l'élaboration des vecteurs de commande de poussée.

Dans le mode automatique de poussée, le ou chaque vecteur de commande de poussée est élaboré uniquement à partir des signaux reçus des capteurs du système de capteurs 18 en fonction d'au moins une consigne de vol choisie, par exemple en fonction d'une pluralité de consignes de vol. Ainsi, un actionnement de la manette des gaz 16 par le pilote n'est pas pris en compte dans l'élaboration des vecteurs de commande de poussée.

Chaque consigne de vol est par exemple définie manuellement par un membre de l'équipage par l'intermédiaire de l'interface homme-machine 24. Chaque consigne de vol est par exemple un cap et/ou une route et/ou une vitesse air et/ou un Mach, et/ou une altitude, et/ou une pente de montée ou descente, et/ou une consigne de montée la plus grande possible sans décélérer, ou une consigne de descente la plus faible possible sans accélérer.

Ainsi, dans cette variante, les algorithmes d'auto-manette de l'état de la technique sont remplacés par un pilotage automatique de la poussée par la centrale de commande de vol 20.

Alternativement, l'aéronef 12 est par exemple un drone. L'aéronef 12 est alors dépourvu de manette des gaz.

Les différents modes de réalisation et les différentes variantes décrites ci-dessus sont combinés suivant toute combinaison techniquement possible.

Grace aux caractéristiques précédemment décrites, le système de pilotage 10 est robuste aux bruits d'acquisition analogique de la manette des gaz 16. En particulier, la distance entre la manette des gaz 16 et le moteur 14 n'a plus d'impact sur les bruits de la commande de poussée.

La centrale de calcul moteur 22 ne nécessite plus d'étage dédié d'acquisition de signaux analogiques pour recevoir la commande de la poussée. La fiabilité du système en est donc améliorée dans la mesure où une liaison numérique est moins dépendante de l'environnement thermique et des vibrations générées par le moteur 14 qu'une liaison analogique.

De plus, il est alors possible de condenser l'électronique.

La centrale de commande de vol 20 permet aussi de faire circuler des informations additionnelles à la consigne d'actionnement des organes de commande 42, 44 du moteur 14 (commandes pilote, paramètres anémométriques), et donc de supprimer des liaisons numériques supplémentaires dans l'aéronef. Un gain de masse en découle et la cohérence des informations utilisées dans l'aéronef est améliorée.

Aussi, grâce à l'invention qui vient d'être décrite, il est donc possible d'encapsuler des données fonctionnelles en les sécurisant lors de chaque élaboration de données et non au niveau de la transmission de données.

Les données fonctionnelles ainsi encapsulées sont donc très sécurisées, et ceci empêche que la perte ou l'erroné de ces données ne produise des conséquences critiques sur l'aéronef 12.

De plus, dans le système de pilotage 10 décrit, la perte de la motorisation de la manette des gaz 16 ne conduit plus à la perte de la fonction de commande automatique de la poussée. De manière plus générale, la perte totale de la fonction manette n'implique plus une incapacité à piloter le moteur.

La qualité de la régulation de la poussée est grandement améliorée, puisqu'elle ne fait plus uniquement intervenir la manette des gaz 16.

Enfin, l'invention croise de manière inattendue les exigences de certification de trois domaines différents, à savoir ceux portant sur l'automatisation de la poussée, le calcul de la commande de poussée et le traitement de la manette des gaz 16.

## Revendications

1. Système (10) de pilotage d'aéronef (12) comportant :
- une manette des gaz (16), actionnable par un pilote de l'aéronef (12), la manette des gaz (16) comprenant au moins un levier (26) et un corps de base (28), le levier (26) étant mobile angulairement ou en translation par rapport au corps de base (28), la manette des gaz (16) étant configurée pour émettre un signal représentatif de la position du levier (26) par rapport au corps de base (28) ;
- un système de capteurs (18) de paramètres de vol de l'aéronef (12) ;
- une centrale de calcul moteur (22) propre à contrôler des paramètres de poussée d'au moins un moteur (14) de l'aéronef (12) en actionnant des organes de commande (42, 44) du moteur (14) ;
- -une centrale de commande de vol (20) raccordée à la centrale de calcul moteur (22), aux capteurs du système de capteurs (18) et à la manette des gaz (16) ;
la centrale de commande de vol (20) étant configurée pour élaborer au moins un vecteur de commande de poussée à partir d'au moins une loi de commande de vol, la loi de commande de vol ayant pour données d'entrée au moins les signaux reçus de la manette des gaz (16) et/ou des capteurs du système de capteurs (18) ;
la centrale de commande de vol (20) étant configurée pour envoyer un signal numérique comprenant le vecteur de commande de poussée élaboré à la centrale de calcul moteur (22) ; et
la centrale de calcul moteur (22) étant configurée pour recevoir le signal numérique et contrôler lesdits paramètres de poussée du moteur (14) en fonction du vecteur de commande de poussée élaboré reçu ;
**caractérisé en ce que** la manette des gaz (16) comprend en outre un moteur (30) configuré pour déplacer le levier (26) par rapport au corps de base (28) ; la centrale de commande de vol (20) étant configurée pour commander le moteur (30) de la manette des gaz (16).

2. Système (10) selon la revendication 1, dans lequel la centrale de commande de vol (20) comprend au moins quatre calculateurs (38) redondants de commande de vol, chaque calculateur de commande de vol (38) étant connecté à la manette des gaz (16) et au système de capteurs (18), étant configuré pour élaborer en parallèle un vecteur de commande de poussée à partir d'au moins ladite loi de commande de vol, et pour envoyer un signal numérique comprenant le vecteur de commande de poussée à la centrale de calcul moteur (22).

3. Système (10) selon la revendication 2, dans lequel la centrale de calcul moteur (22) comprend au moins deux calculateurs moteurs redondants (46) connectés l'un à l'autre, chaque calculateur moteur (46) étant configuré pour réaliser une sélection parmi les vecteurs de commande élaborés en parallèle par chaque calculateur de commande de vol (38), et pour contrôler lesdits paramètres de poussée du moteur (14) en fonction du vecteur de commande sélectionné.

4. Système (10) selon la revendication 3, dans lequel, pour chaque calculateur de commande de vol (38), une liaison (48) de transfert de données numériques relie ledit calculateur de commande de vol (38) à un seul des calculateurs moteurs (46), un premier des calculateurs moteurs (46) étant connecté par au moins une des liaisons (48) de transfert de données numériques à deux des calculateurs de commande de vol (38) et un deuxième des calculateurs moteurs (46) étant connecté par au moins une autre des liaisons (48) de transfert de données numériques aux deux autres des calculateurs de commande de vol (38) ; les calculateurs moteurs (46) étant configurés pour communiquer l'un à l'autre les vecteurs de commande respectivement reçus.

5. Système (10) selon l'une quelconque des revendications 3 ou 4, dans lequel chaque signal numérique inclut une pluralité de capsules émises à des instants successifs, chaque capsule comprenant un identifiant de producteur de données, un compteur incrémenté à chaque élaboration de données, un paquet de données fonctionnelles comprenant ledit vecteur de commande de poussée, et un résultat de contrôle d'intégrité des données portant sur l'identifiant, le compteur et le paquet de données fonctionnelles ;
chaque calculateur moteur (46) étant configuré pour récupérer l'identifiant, le compteur, le paquet de données fonctionnelles, et le résultat de contrôle d'intégrité de capsules parallèles reçues contenant les vecteurs de commande élaborés en parallèle, et pour mettre en œuvre au moins un contrôle d'identification de l'identifiant, au moins un contrôle de validité du compteur et au moins un contrôle d'intégrité dudit résultat de contrôle des capsules parallèles reçues ;
chaque calculateur moteur (46) étant configuré pour sélectionner le vecteur de commande de poussée d'une desdites capsules parallèles reçues au moins si l'identifiant de la capsule est correct, si la capsule est valide et si la capsule est intègre.

6. Système (10) selon la revendication 5, dans lequel, lors du contrôle d'identification, le calculateur moteur (46) est configuré pour déterminer un état d'identification de la capsule entre un état d'identification correct et un état d'identification incorrect, en fonction de l'identifiant récupéré de la capsule reçue et d'un identifiant attendu pour la capsule reçue.

7. Système (10) selon l'une quelconque des revendications 5 ou 6, dans lequel, lors du contrôle de validité, le calculateur moteur (46) est configuré pour déterminer un incrément de compteur à partir du compteur récupéré et à partir du compteur d'une autre capsule précédemment reçue par le calculateur moteur (46), et pour déterminer un état de validité de la capsule entre un état valide et un état invalide en fonction d'une cohérence de l'incrément de compteur.

8. Système (10) selon l'une quelconque des revendications 5 à 7, dans lequel, lors du contrôle d'intégrité, le calculateur moteur (46) est configuré pour déterminer un état d'intégrité des données de la capsule entre un état intègre et un état corrompu en établissant un nouveau résultat de contrôle d'intégrité à partir de l'identifiant, du compteur et du paquet de données fonctionnelles récupérés dans la capsule reçue, et en comparant le nouveau résultat de contrôle d'intégrité au résultat de contrôle d'intégrité récupéré dans la capsule.

9. Système (10) selon l'une quelconque des revendications précédentes, dans lequel chaque vecteur de commande comprend une consigne d'actionnement des organes de commande (42, 44) du moteur (14) et au moins une information additionnelle, la ou chaque information additionnelle étant de préférence un paramètre anémométrique.

10. Système (10) selon l'une quelconque des revendications précédente, dans lequel la centrale de commande de vol (20) présente un mode manuel de poussée, dans lequel le ou chaque vecteur de commande de poussée est élaboré à partir des signaux reçus de la manette des gaz (16) et des capteurs du système de capteurs (18), et un mode automatique de poussée, dans lequel le ou chaque vecteur de commande de poussée est élaboré uniquement à partir des signaux reçus des capteurs du système de capteurs (18) en fonction d'une consigne de vol choisie.

11. Système (10) selon l'une quelconque des revendications précédentes, dans lequel les paramètres de poussée contrôlés par la centrale de calcul moteur (22) comprennent au moins un débit de carburant, une ignition, et une proportion de mélange carburant/air.

12. Système (10) selon l'une quelconque des revendications précédentes, dans lequel la centrale de commande de vol (20) est configurée pour commander le moteur (30) de la manette des gaz (16), en fonction d'une règle de commande prédéterminée.

13. Système (10) selon la revendication 12, dans lequel la règle de commande est fonction de chaque vecteur de commande de poussée élaboré, le moteur (30) est alors commandé de préférence en fonction de la règle de commande pour déplacer le levier (26) par rapport au corps de base (28), d'un déplacement représentatif de la poussée commandée ; le déplacement commandé correspondant de préférence au déplacement qu'aurait le levier (26) de la manette des gaz (16) si le pilote avait commandé une poussée correspondant au vecteur de commande élaboré.

14. Système (10) selon la revendication 12, dans lequel la règle de commande est indépendante de chaque vecteur de commande de poussée élaboré.

15. Procédé (100) de pilotage d'un aéronef comprenant :
- la fourniture (102) d'un système de pilotage (10) selon l'une quelconque des revendications 1 à 14 ;
- l'élaboration (104), par la centrale de commande de vol (20), d'au moins un vecteur de commande de poussée à partir d'au moins ladite loi de commande de vol ayant pour données d'entrée au moins les signaux reçus de la manette des gaz (16) et/ou des capteurs du système de capteurs (18) ;
- l'envoi (106) d'un signal numérique comprenant le vecteur de commande de poussée élaboré à la centrale de calcul moteur (22) ;
- la réception (108) du signal numérique, par la centrale de calcul moteur (22), et le contrôle (110) des paramètres de poussée du moteur (14) en fonction du vecteur de commande de poussée élaboré reçu.

## Patentansprüche

1. System (10) zum Steuern eines Luftfahrzeugs (12), umfassend:
- einen Gashebel (16), der von einem Piloten des Luftfahrzeugs (12) betätigbar ist, der Gashebel (16) umfassend mindestens einen Hebel (26) und einen Grundkörper (28), wobei der Hebel (26) in Bezug auf den Grundkörper (28) winkelmäßig oder translatorisch beweglich ist, wobei der Gashebel (16) konfiguriert ist, um ein Signal auszugeben, das repräsentativ für die Position des Hebels (26) in Bezug auf den Grundkörper (28) ist;
- ein System von Sensoren (18) für Flugparameter des Luftfahrzeugs (12);
- eine Motorrechenzentrale (22), die geeignet ist, um Schubparameter mindestens eines Motors (14) des Luftfahrzeugs (12) durch Betätigen von Steuerorganen (42, 44) des Motors (14) zu steuern;
eine Flugsteuerungszentrale (20), die mit der Motorrechenzentrale (22), den Sensoren des Sensorsystems (18) und dem Gashebel (16) verbunden ist;
wobei die Flugsteuerungszentrale (20) konfiguriert ist, um mindestens einen Schubsteuerungsvektor anhand mindestens eines Flugsteuerungsgesetzes zu ermitteln, wobei das Flugsteuerungsgesetz als Eingangsdaten mindestens die von dem Gashebel (16) und/oder von den Sensoren des Sensorsystems (18) empfangenen Signale aufweist;
wobei die Flugsteuerungszentrale (20) konfiguriert ist, um ein digitales Signal, das den ermittelten Schubsteuerungsvektor enthält, an die Motorrechenzentrale (22) zu senden; und
wobei die Motorrechenzentrale (22) konfiguriert ist, um das digitale Signal zu empfangen und die Schubparameter des Motors (14) abhängig von dem empfangenen ermittelten Schubsteuerungsvektor zu steuern;
**dadurch gekennzeichnet,**
**dass** der Gashebel (16) ferner einen Motor (30) umfasst, der konfiguriert ist, um den Hebel (26) in Bezug auf den Grundkörper (28) zu bewegen; wobei die Flugsteuerzentrale (20) konfiguriert ist, um den Motor (30) des Gashebels (16) zu steuern.

2. System (10) nach Anspruch 1, wobei die Flugsteuerungszentrale (20) mindestens vier redundante Flugsteuerungsrechner (38) umfasst, wobei jeder Flugsteuerungsrechner (38) mit dem Gashebel (16) und dem Sensorsystem (18) verbunden ist, konfiguriert ist, um parallel einen Schubsteuerungsvektor aus mindestens dem Flugsteuerungsgesetz zu ermitteln und um ein digitales Signal, das den Schubsteuerungsvektor umfasst, an die Motorrechenzentrale (22) zu senden.

3. System (10) nach Anspruch 2, wobei die Motorrechenzentrale (22) mindestens zwei redundante Motorrechner (46) umfasst, die miteinander verbunden sind, wobei jeder Motorrechner (46) konfiguriert ist, um eine Auswahl aus den Steuerungsvektoren, die parallel von jedem Flugsteuerungsrechner (38) ermittelt werden, durchzuführen und die Schubparameter des Motors (14) abhängig von dem gewählten Steuerungsvektor zu steuern.

4. System (10) nach Anspruch 3, wobei für jeden Flugsteuerungsrechner (38) eine digitale Datenübertragungsverbindung (48) den Flugsteuerungsrechner (38) mit einem einzigen der Motorrechner (46) verbindet, wobei ein erster der Motorrechner (46) durch mindestens eine der digitalen Datenübertragungsverbindungen (48) mit zweien der Flugsteuerungsrechner (38) verbunden ist und ein zweiter der Motorrechner (46) durch mindestens eine andere der digitalen Datenübertragungsverbindungen (48) mit den zwei anderen der Flugsteuerungsrechner (38) verbunden ist; wobei die Motorrechner (46) konfiguriert sind, um die jeweils empfangenen Steuerungsvektoren untereinander zu kommunizieren.

5. System (10) nach einem der Ansprüche 3 oder 4, wobei jedes digitale Signal eine Vielzahl von Kapseln beinhaltet, die zu aufeinanderfolgenden Zeitpunkten gesendet werden, wobei jede Kapsel eine Datenerzeuger-Kennung, einen Zähler, der bei jeder Datenverarbeitung inkrementiert wird, ein Funktionsdatenpaket, das den Schubsteuerungsvektor enthält, und ein Ergebnis einer Datenintegritätsprüfung der Kennung, des Zählers und des Funktionsdatenpakets umfasst;
wobei jeder Motorrechner (46) konfiguriert ist, um die Kennung, den Zähler, das Funktionsdatenpaket und das Ergebnis der Integritätsprüfung von empfangenen parallelen Kapseln, die die parallel ermittelten Steuerungsvektoren enthalten, wiederherzustellen und mindestens eine Identifikationsprüfung der Kennung, mindestens eine Gültigkeitsprüfung des Zählers und mindestens eine Integritätsprüfung des Prüfergebnisses der empfangenen parallelen Kapseln durchzuführen;
wobei jeder Motorrechner (46) konfiguriert ist, um den Schubsteuerungsvektor einer der empfangenen parallelen Kapseln mindestens dann auszuwählen, wenn die Kapselkennung korrekt ist, wenn die Kapsel gültig ist und wenn die Kapsel integer ist.

6. System (10) nach Anspruch 5, wobei bei der Identifikationsprüfung der Motorrechner (46) konfiguriert ist, um einen Identifikationszustand der Kapsel zwischen einem korrekten Identifikationszustand und einem nicht korrekten Identifikationszustand abhängig von der wiederhergestellten Kennung der empfangenen Kapsel und einer erwarteten Kennung für die empfangene Kapsel zu bestimmen.

7. System (10) nach einem der Ansprüche 5 oder 6, wobei bei der Gültigkeitsprüfung der Motorrechner (46) konfiguriert ist, um ein Zählerinkrement aus dem wiederhergestellten Zähler und aus dem Zähler einer anderen Kapsel, die zuvor von dem Motorrechner (46) empfangen wurde, zu bestimmen und einen Gültigkeitszustand der Kapsel zwischen einem gültigen Zustand und einem ungültigen Zustand abhängig von einer Kohärenz des Zählerinkrements zu bestimmen.

8. System (10) nach einem der Ansprüche 5 bis 7, wobei bei der Integritätsprüfung der Motorrechner (46) konfiguriert ist, um einen Integritätszustand der Kapseldaten zwischen einem integren Zustand und einem beschädigten Zustand durch Ermitteln eines neuen Ergebnisses der Integritätsprüfung aus der Kennung, dem Zähler und dem Funktionsdatenpaket, die in der empfangenen Kapsel wiederhergestellt wurden und durch Vergleichen des neuen Ergebnisses der Integritätsprüfung mit dem in der Kapsel wiederhergestellten Ergebnis der Integritätsprüfung zu bestimmen.

9. System (10) nach einem der vorhergehenden Ansprüche, wobei jeder Steuerungsvektor einen Sollwert für die Betätigung der Steuerorgane (42, 44) des Motors (14) und mindestens eine Zusatzinformation umfasst, wobei die oder jede Zusatzinformation vorzugsweise ein Windparameter ist.

10. System (10) nach einem der vorhergehenden Ansprüche, wobei die Flugsteuerungszentrale (20) einen manuellen Schubmodus aufweist, bei dem der oder jeder Schubsteuerungsvektor aus den Signalen ermittelt wird, die von dem Gashebel (16) und den Sensoren des Sensorsystems (18) empfangen werden, und einen automatischen Schubmodus, bei dem der oder jeder Schubsteuerungsvektor nur aus den von den Sensoren des Sensorsystems (18) empfangenen Signalen abhängig von einem gewählten Flugsollwert ermittelt wird.

11. System (10) nach einem der vorhergehenden Ansprüche, wobei die von der Motorrechenzentrale (22) kontrollierten Schubparameter mindestens einen Kraftstoffdurchsatz, eine Zündung und ein Kraftstoff-/Luftgemisch-Verhältnis umfassen.

12. System (10) nach einem der vorhergehenden Ansprüche, wobei die Flugsteuerungszentrale (20) konfiguriert ist, um den Motor (30) des Gashebels (16) entsprechend einer vorbestimmten Steuerregel zu steuern.

13. System (10) nach Anspruch 12,
wobei die Steuerregel
eine Funktion jedes erarbeiteten Schubsteuervektors ist, der Motor (30) dann vorzugsweise abhängig von der Steuerregel gesteuert wird, um den Hebel (26) in Bezug auf den Grundkörper (28) um eine für den gesteuerten Schub repräsentative Verschiebung zu bewegen; wobei die gesteuerte Verschiebung vorzugsweise der Verschiebung entspricht, die der Hebel (26) des Gashebels (16) aufweisen würde, wenn der Pilot einen dem erarbeiteten Steuervektor entsprechenden Schub gesteuert hätte.

14. System (10) nach Anspruch 12, wobei die Steuerregel unabhängig von jedem ermittelten Schubsteuerungsvektor ist.

15. Verfahren (100) zum Steuern eines Luftfahrzeugs, umfassend:
- das Bereitstellen (102) eines Steuerungssystems (10) nach einem der Ansprüche 1 bis 14;
- das Ermitteln (104), durch die Flugsteuerungszentrale (20), von mindestens einem Schubsteuerungsvektor aus mindestens dem Flugsteuerungsgesetz, das als Eingangsdaten mindestens die vom Gashebel (16) und/oder von den Sensoren des Sensorsystems (18) empfangenen Signale hat;
- das Senden (106) eines digitalen Signals, das den ermittelten Schubsteuerungsvektor enthält, an die Motorrechenzentrale (22);
- das Empfangen (108) des digitalen Signals durch die Motorrechenzentrale (22) und das Kontrollieren (110) der Schubparameter des Motors (14) abhängig von dem empfangenen ermittelten Schubsteuerungsvektor.

## Claims

1. A piloting system (10) of an aircraft (12), comprising:
- a throttle (16), operable by a pilot of the aircraft (12), the throttle (16) including at least one lever (26) and a base body (28), the lever (26) being angularly or translationally movable relative to the base body (28), the throttle (16) being configured to emit a signal representative of the lever position (26) relative to the base body (28);
- a sensor system (18) for flight parameters of the aircraft (12);
- an engine calculator (22) capable of controlling thrust parameters of at least one engine (14) of the aircraft (12) by actuating control members (42, 44) of the engine (14);
- a flight control unit (20) connected to the engine calculator (22), to the sensors of the sensor system (18) and to the throttle (16);
the flight control unit (20) being configured to generate at least one thrust control vector from at least one flight control law, the flight control law having at least the signals received from the throttle (16) and/or from the sensors of the sensor system (18) as input data;
the flight control unit (20) being configured to send a digital signal comprising the generated thrust control vector to the engine calculator (22); and
the engine calculator (22) being configured to receive the digital signal and to control said thrust parameters of the engine (14) depending on the generated thrust control vector received
**characterized in that** the throttle (16) further comprises a motor (30) configured to move the lever (26) relative to the base body (28); the flight control unit (20) being configured to control the motor (30) of the throttle (16).

2. The piloting system (10) according to claim 1, wherein the flight control unit (20) comprises at least four redundant flight control computers (38), each flight control computer (38) being connected to the throttle (16) and to the sensor system (18), being configured to develop a thrust control vector, in parallel, from at least said flight control law, and being configured to send a digital signal including the thrust control vector to the engine calculator (22).

3. The piloting system (10) according to claim 2, wherein the engine calculator (22) comprises at least two redundant engine controllers (46) connected to each other, each engine controllers (46) being configured to make a selection from among the control vectors generated in parallel by each flight control computer (38), and to control said thrust parameters of the engine (14) depending on the selected control vector

4. The piloting system (10) according to claim 3, wherein, for each flight control computer (38), a digital data transfer link (48) connects said flight control computer (38) to only one of the engine controllers (46), a first one of the engine controllers (46) being connected by at least one of the digital data transfer links (48) to two of the flight control computers (38) and a second one of the engine controllers (46) being connected by at least one other of the digital data transfer links (48) to the other two of the flight control computers (38); the engine controllers (46) being configured to communicate the respective received control vectors to each other.

5. The piloting system (10) according to any one of claims 3 or 4, wherein each digital signal includes a plurality of capsules transmitted at successive times, each capsule comprising a data producer identifier, a counter incremented at each data processing, a functional data packet comprising said thrust control vector, and a data integrity check result relating to the identifier, the counter and the functional data packet ;
each engine controller (46) being configured to retrieve the identifier, the counter, the functional data packet, and the integrity check result of received parallel capsules containing the control vectors generated in parallel, and to implement at least one identification check of the identifier, at least one validity check of the counter and at least one integrity check of said integrity check result of the received parallel capsules;
each engine controller (46) being configured to select the thrust control vector of one of said received parallel capsules, at least if the capsule identifier is correct, if the capsule is valid and if the capsule has integrity.

6. The piloting system (10) according to claim 5, wherein, during the identification check, the engine controller (46) is configured to determine a capsule identification status, from a correct identification status or an incorrect identification status, based on the retrieved identifier of the capsule received and an expected identifier for the capsule received.

7. The piloting system (10) according to any one of claims 5 or 6, wherein, during the validity check, the engine controller (46) is configured to determine a counter increment from the retrieved counter and from the counter of another capsule previously received by the engine controller (46), and to determine a validity status of the capsule between a valid status and an invalid status based on a consistency of the counter increment.

8. The piloting system (10) according to any one of claims 5 to 7, wherein, during the integrity check, the engine controller (46) is configured to determine a data integrity status of the capsule, from an integrity status or a corrupted status, by establishing a new integrity check result from the identifier, counter, and functional data packet retrieved from the capsule received, and comparing the new integrity check result to the integrity check result retrieved from the capsule.

9. The piloting system (10) according to any one of the preceding claims, wherein each thrust control vector comprises a command for actuating the control members (42, 44) of the engine (14) and at least one additional item of information, the/each additional item of information preferably being an anemometric parameter.

10. The piloting system (10) according to any one of the preceding claims, wherein the flight control unit (20) has a manual thrust mode in which the/each thrust control vector is generated from signals received from the throttle (16) and the sensors of the sensor system (18), and an automatic thrust mode in which the/each thrust control vector is generated solely from signals received from the sensors of the sensor system (18), depending on a selected flight setpoint.

11. The piloting system (10) according to any one of the preceding claims, wherein the thrust parameters controlled by the engine calculator (22) include at least fuel flow rate, ignition, and fuel/air mixture ratio.

12. The piloting system (10) according to any one of the preceding claims, wherein the flight control unit (20) is configured for controlling the motor (30) of the throttle (16) depending on a predetermined controlling rule.

13. The piloting system (10) according to claim 12, wherein the control rule is based on each generated thrust vector, the motor (30) is then preferably controlled depending on the control rule to move the lever (26) of a movement representative of the thrust ordered; the movement ordered preferably corresponding to what the lever (26) of the throttle (16) would have had if the pilot had ordered thrust corresponding to the generated control vector.

14. The piloting system (10) according to claim 12, wherein the control rule is independent of each generated thrust control vector.

15. A method (100) for piloting an aircraft comprising:
- providing (102) a piloting system (10) according to any one of claims 1 to 14 ;
- generating (104), by the flight control unit (20), at least one thrust control vector from at least said flight control law having at least the signals received from the throttle (16) and/or from the sensors of the sensor system (18) as input data;
- sending (106) a digital signal comprising the generated thrust control vector to the engine calculator (22);
- receiving (108), by the engine calculator (22), the digital signal and controlling (110) the thrust parameters of the engine (14), depending on the received generated thrust control vector.
